Europäisches Patentamt

European Patent Office

Office européen des brevets

(11) Publication number: **0 437 098 A2**

# EUROPEAN PATENT APPLICATION

(21) Application number: 90314280.0

(22) Date of filing: 24.12.90

(51) Int. Cl.5: **A23G 3/00**

(30) Priority: 11.01.90 US 463050

(43) Date of publication of application:
17.07.91 Bulletin 91/29

(84) Designated Contracting States:
BE CH DE DK ES FR GB GR IT LI NL SE

(71) Applicant: **WARNER-LAMBERT COMPANY**
**201 Tabor Road**
**Morris Plains New Jersey 07950(US)**

(72) Inventor: **Cherukuri, Subraman Rao**
**10 Jean Drive**
**Towaco, New Jersey 07082(US)**
Inventor: **Corsello, Vincent**
**2 Sycamore Terrace**
**Cedar Knolls, New Jersey 07927(US)**
Inventor: **Raman, Krishna**
**5 Marre Drive**
**Randolph, New Jersey 07869(US)**
Inventor: **Hussein, Mamoun**
**115 Boulevard**
**Mt. Lakes, New Jersey 07046(US)**
Inventor: **Orama, Angel**
**19 Elizabeth Avenue**
**Stanhope, New Jersey 07874(US)**

(74) Representative: **Jones, Michael Raymond et al**
**HASELTINE LAKE & CO. Hazlitt House 28**
**Southampton Buildings Chancery Lane**
**London WC2A 1AT(GB)**

(54) Compressed confectionery tablets with at least two phases and sequential flavour delivery system.

(57) A confectionery compressed tablet is provided which is characterized by a single product body with discrete phases contained therein which act to provide timed release of at least one flavor ingredient sequentially. There is also provided a process for preparing a confectionery compressed tablet which provides sequential delivery of flavor, wherein a first phase provides at least a second phase provides a mouthfeel texturally different from the first phase.

# COMPRESSED CONFECTIONERY TABLETS WITH AT LEAST TWO PHASES AND SEQUENTIAL FLAVOUR DELIVERY SYSTEM

## BACKGROUND OF THE INVENTION

The present invention relates to controlled release of flavors, sweeteners, and mixtures thereof in compressed tablets, and, in particular, provides both instant and timed delivery to the oral cavity of taste-affecting ingredients in compressed tablets.

Flavor delivery systems are well known in the art and may be divided into various classes based upon their physical characteristic, namely, liquid, emulsion, paste or solid. Not only are these characteristics different, but the potential uses for each type of flavor also differ as do their method of manufacture.

Over the years, considerable effort has been directed toward the preparation of flavoring materials. Specifically, flavor materials have been sought to provide greater intensity coupled with sustained flavor release for long periods of time.

To overcome difficulty with flavor oils in particular, various attempts have been made to encapsulate flavor oils or use dried ingredients to prolong the delivery of the flavors. Further considerable effort has been directed to the development of delayed-release agents which will delay release of the flavor and permit uniform release of the flavor over an extended period of time.

Spray drying is one of the most widely used techniques for encapsulating or fixing a flavor and such are well known in the art. Flavor fixation has also been obtained by the extrusion method wherein the flavor oil is co-extruded with a water soluble sugar or sugar mixture, dried and ground for use. These products find application in dry mixes for instant release of the flavor upon contact with water. Such products generally contain 10 to 15% by weight of flavor oil. An extensive discussion of the prior art with respect to the extension of flavor is found in U.S. Patent No. 4,590,075 to Wei et al. The patentees discuss the preparation of encapsulated flavors which are added together with a quantity of non-confined hydrophobic flavor oil to a suspension agent before formulation in a chewing gum (U.S. Patent No. 3,920,849 to Marmo et al.); the encapsulation of flavor in high molecular weight material such as polyvinyl acetate (U.S. Patent No. 3,826,847 to Ogawa et al.); the preparation of a flavor composite by cross-linking the flavor with a water-insoluble hydrophilic polymer such as hydroxyethyl acrylate (U.S. Patent No. 3,761,286); and the preparation of microencapsulated flavor particles and their dispersion in a slurry on the surface of a chewing gum (U.S. Patent No. 3,962,463). Further, U.S. Patent No. 4,695,462 to Yang et al. is noted which contains a discussion regarding a flavor delivery system that relies on the immobilization of the flavor within a cross-linked hydrocolloid multivalent alginate or carageenenate matrix.

Further, in U.S. Patent No. 4,597,970 to Sharma, et al. a delivery system preparation is disclosed for actives such as sweeteners and flavors which utilizes a hydrophobic matrix comprising edible fatty acids or waxes, lecithin and a glyceride component. This system is urged to provide a protective barrier and controlled release characteristics to the active so contained. The combination of materials in the encapsulating matrix provides wetting capabilities with respect to non-uniform core materials such as aspartame, while providing improved heat stability and thereby, extended high temperature processing capability. These attributes were frequently achieved at a cost of delay in release of the active.

U.S. Patent No. 3,867,556 to Darragh, et al. also discloses volatile flavors encapsulated in a fat or wax material. The patentees had found that the initial or base encapsulation displayed excessive instability to heat, and as their product was intended primarily for incorporation into baked goods, they applied a second coating of a water-soluble material such as gum arabic, which would provide high temperature stability while conferring rapid disintegration on contact with moisture. The Darragh, et al. product likewise exhibited delayed flavor release.

Further, U.S. Patent No. 4,515,769 to Merritt, et al. discloses the encapsulation of flavor material in a partially hydrophilic matrix comprising gelatin, a natural gum or albumin or a plasticizer. This combined encapsulant was placed in an emulsion with the flavoring agent and thereafter dried to a solid matrix which was then ground to a base powder. The base powder was then coated with a water-insoluble material which purported to prevent flavor loss and delay flavor release in contact with moisture. Merritt, et al. sought only to achieve a burst of flavor when the physical mastication of their flavor composite ruptured the outer encapsulating material.

U.S. Patent No. 4,087,557 to Bakal, et al. relates to the incorporation of an artificial sweetener directly into the ester gum component of a chewing gum base, to achieve a delay and corresponding extension in sweetener release (column 2, lines 31-42). The patent contemplates the incorporation of certain flavors, specifically food acids such as tartaric acid, succinic acid, etc. directly into the ester gum component.

Bakal, et al. however, indicate that conventional flavors such as flavor oils are added separately after the gum base constituents including the artificial sweetener-containing ester gum have been mixed with each other and cooled. The flavor component is incorporated into chewing gums prepared in accordance with the patent in the conventional fashion, i.e., by direct incorporation of the artificial flavor and/or by the incorporation of flavor coated with a hydrophilic material such as gum arabic. Bakal et al. accordingly offers no solutions to the problem of flavor delivery and extension of concern to the art.

Other approaches to the preparation of flavor composites, particularly with flavor oils, are noted. Thus, U.S. Patent No. 3,041,180 to Swisher discloses a process for extruding a flavor oil with glycerine and corn syrup solids to form an encapsulated extruded flavor oil. The solid was dried and yielded a particulate solid. U.S. Patent No. 4,610,890 to Miller, et al. discloses another process for preparing an extruded flavor oil with sugar, a starch hydrolysate and an emulsifier.

U.S. Patent Nos. 4,448,789 and 4,569,852 to Yang discloses a novel flavoring agent -- hydrophilic polymer - - by blending the flavor with the polymer and blending while heating to prepare a homogeneous product. Once coupled and ground, the product can be used as a flavoring for chewing gum and confectionery products.

U.S. Patent No. 4,271,202 to Giel relates to a spray-drying process for forming solid flavoring material capable of including high percentages of flavoring oil per total particulate unit of weight. Because of the high oil content possible, such spray-dried products have found wide use in a number of beverages and other foods. However, it was also found that spray-dried flavors prepared by this and similar known methods typically exhibit a relatively limited shelf life. In addition, the high temperatures necessarily involved during spray-drying processes have been found to impair the flavor and aroma of various heat-sensitive oil flavors, such as those in citrus fruit. Furthermore, solids formed by spray-drying commonly exhibit hygroscopic characteristics making them difficult to handle and store.

In addition to the techniques set forth above, U.S. Patent No. 4,452,821 to Gergely is directed to a confectionery product, especially a chewing gum, that purports to offer prolonged, extended delivery of flavoring aroma and/or active pharmaceutical ingredients. This is accomplished by providing the flavoring, aroma or active pharmaceutical ingredient in a solid solution or mixture within a wax containing functional groups with the wax forming a homogeneous mixture of solid solution. The wax does not contain any functional groups and is substantially immiscible with the flavoring, aroma or active pharmaceutical ingredient.

The approaches to flavor modification discussed above all fall short of providing a flavor delivery system which achieves the advantages of flavor intensity and fullness inherent in flavor oils in combination with improved release and extension characteristics.

In most instances where confectionery compressed tablets contain flavor liquid components, such tablets are unable to provide both rapid initial delivery and long lasting delivery of flavors or breath freshening agents. Moreover, these confectionery compressed tablets suffer from a relatively short shelf life. Shortened shelf life has been caused by flavor migration or evaporation, and interaction with other ingredients has also been known to occur. In addition, manufacturers of confectionery compressed tablets of the prior art are required to exercise precautions in handling due to the lack of temperature stability of the product.

In commonly assigned co-pending Application Serial No. 361,529 filed June 5, 1989, a flavor composite is disclosed which comprises a liquid flavor in a solution mixture with a resin component selected from wood rosins, ester gums and mixtures thereof. This composite offers greater efficiency in flavor delivery with improved protection and prolonged release of the flavor active. While the aforenoted composite represents a dramatic improvement in flavor delivery, the broad and diverse environments in which flavors and other actives are desirably incorporated places demands upon the stability and integrity of the delivery system. Moreover, in commonly assigned co-pending Application having internal Assignee Docket No. PD 2084 a means for sequential release of flavor components has been disclosed which depends primarily on the encapsulating or flavor-fixing scheme employed.

While it would seem that hydrophobic encapsulating agents provide better impermeability and gradual release characteristics than hydrophilic coatings, it is not known whether any hydrophobic coatings have been successfully employed in the past for use in compressed tablets which are capable of sequentially releasing active ingredients in phases while remaining in the oral cavity and delivering the flavor ingredients.

It is, therefore, an object of the present invention to provide a multiple phase compressed tablet providing both a rapid initial delivery as well as timed delivery of flavor ingredients to the oral cavity.

It is another object of the present invention to provide a compressed tablet which can be used to provide heightened as well as varied organoleptic responses which are pleasing to the consumer.

It is another object of the present invention to provide a compressed tablet with improved temperature stability of the flavor ingredients contained within the compressed tablet.

Still another object of the present invention is to provide a compressed tablet which results in reduced oxidation.

It is another object of the present invention to provide a compressed tablet with reduced interaction of the active ingredients contained within the compressed tablet.

It is still another object of the present invention to provide a compressed tablet with reduced flavor migration.

It is a further object of the present invention to provide a compressed tablet or other comestible product with improved shelf life.

Other objects and advantages will become apparent to those skilled in the art from a consideration of the ensuing description which proceeds with reference to the following illustrative drawings.

## SUMMARY OF THE INVENTION

The present invention includes a compressed tablet having at least two distinct physical phases which provides selective timed delivery of flavor ingredients to the oral cavity. The present tablet includes a first phase which provides a physical structure for the tablet, and a second phase providing a mouth feel which is texturally different from the first phase. Furthermore, the compressed tablets of the present invention include a first flavor ingredient intimately bound in a hydrophilic composition for instantaneous delivery of the first ingredient to the oral cavity. The first flavor ingredient is included in either the first phase, the second phase, or both first and second phases. Finally, the present invention includes a second flavor ingredient encapsulated in a hydrophobic composition for timed delivery of the second ingredient to the oral cavity. The second encapsulated flavor ingredient can be included in either the first phase, the second phase, or both the first and second phases so that selected flavor-delivery sequences can be provided.

The improved confectionery compressed tablet prepared in accordance with the present invention provides the practitioner with the capability of varying not only the physical but also the chemical properties of the different phases of tablet product. Other differences can occur in color, composition, flavor, appearance and dissolution rate in the mouth. The only requirement with regard to the two different phases of the present invention is that they be texturally different, that is the second phase is texturally at variance with the first phase. In a preferred embodiment, the first phase is a hard shell which surrounds a softer second phase, which is a core in relationship to the protective outer shell. Variations of this structure can be provided easily by the skilled artisan. For example, the first (or structural) phase could comprise a compressed two sided tablet having cavities or troughs in either one or both surfaces. A second phase of a texturally softer material could then be deposited such as by pressing the material into the cavity of the trough(s).

The invention also relates to a process for preparing confectionery compressed tablets having two phases and is capable of providing timed flavor release. The method includes preparing the first flavor ingredient and the second flavor ingredient and then preparing the first structural phase, including one or both of the flavor ingredients therein, followed by preparing the second texturally-different phase and including therein either one or both of the flavor ingredients and combining the phases together to form a compressed tablet from the combination. In a preferred embodiment, the first phase is an outer shell portion which can preferably be formed by compressing half of the tablet with the cavity formed therein followed by depositing a preformed second phase of a softer texture in the first cavity and forming thereover the other half of the shell portion and thereafter compressing the tablet to form the product of the present invention.

Of the two flavor components, the first flavor ingredient is intimately bound in a hydrophilic composition which includes an ingredient selected from the group consisting of polymer systems, gums, gelatin, starches, modified starches and other film formers. Gums can be selected from the group consisting of gum arabic, xanthan gum, agar, aeginelis (sodium), carrageenan, guar, keraza, locust bean, traganth, ghatto, cellulose ethers including, among others, Methocel ⓉⓂ and Ethocel ⓉⓂ (products provided by Dow Chemical Company). The active ingredient is intimately bound thereto and can be present in an amount of from about 1% to about 30% by weight of the total hydrophilic composition.

The hydrophobic composition for use in the present invention is preferably prepared by spray congealing the second flavor ingredient with a hydrophobic component selected from fats, waxes, resins and mixtures thereof. When the hydrophobic component is a fat alone, the flavor can be included in the composition in an amount of from about 5% to about 20% by weight of the hydrophobic composition and the fat is present in an amount of from about 50% to about 85% by weight of the hydrophobic composition. When the flavor ingredient is used in combination with wax to form a hydrophobic composition, the wax can be included in an amount of from about 45% to about 85% while the flavor is present in an amount of from about 3% to about 30% by weight of the hydrophobic composition. When the hydrophobic composition is prepared with a resin alone in combination with a flavor, the resin component is present in an amount of from about 20% to about 80% by weight of the composition, while the flavor component is present in an amount of from about 80% to about 20% by weight of the hydrophobic composition.

Other possibilities can be used in the hydrophobic composition such as, for example, a fat and resin combination can be included together with a flavor. In that case, the fat is incorporated in an amount of from about 50% to about 84% by weight, the resin is present in an amount of from about 10% to about 20%, and the flavor component is present in an amount of from about 5% to about 25% by weight of the composition. If a wax is used in combination with a resin, the wax component is included in an amount of from about 45% to about 85%, the resin is included in an amount of from about 10% to about 20%, and the flavor component is present in an amount of from about 5% to about 30% by weight of the hydrophobic composition. When fat and wax are used together, the fat is included in an amount of from about 5% to about 85%, the wax is included in an amount of from about 5% to about 70%, and the flavor component is included in an amount of from about 5% to about 30% of the hydrophobic composition. Finally, when fat, wax and resin are used in combination with flavor, the fat is included in an amount of from about 30% to about 75%, the wax is included in an amount of from about 5% to about 25%, the resin is included in an amount of about 10% to about 25%, and the flavor is included in an amount of from about 5% to about 30% by weight of the hydrophobic composition.

The fat component of the hydrophobic coating includes fatty acids such as hydrogenated and partially hydrogenated oils; mono-, di- and triglycerides, polyglycerol esters and sorbitol esters, with castor oil, hydrogenated soybean oil and hydrogenated cottonseed oil particularly preferred. Waxes include natural and synthetic waxes, with representative waxes including polyolefin waxes, paraffin wax, beeswax, carnauba wax, microcrystalline wax, and mixtures, with microcrystalline wax and carnauba wax being particularly preferred.

The hydrophilic composition may be prepared by spray drying techniques or extrusion techniques which are known in the art.

The hydrophobic composition may be prepared by first heating the fat, wax or mixture thereof to its melting point and maintaining it at a temperature of about 85°C to about 90°C under agitation. An emulsifier may be added to the resulting melt, and in the instance where the delivery system is prepared to include a sweetener, the sweetener is likewise added thereto.

Before the flavor and hydrophobic component are combined, an anti-caking agent such as a silica xerogel is added to the flavor and is mixed to form a slurry. The slurry is then added to the hydrophobic component and the resulting composite is agitated until a first homogenous mixture is formed.

Emulsified flavor oil can then be added to the melted hydrophobic component and is agitated to form a homogeneous mixture which is thereafter spray congealed to form solid particles. Where it is necessary to add a diluent, the diluent is added to the mixture.

A confectionery tablet can be prepared in accordance with the present invention but providing the delivery system including the first and second flavor ingredients to either the first phase or second phase. In one preferred embodiment, the confectionery tablet is in a core shell configuration in which the shell portion is a hard candy texture and structure and includes at least the hydrophilic flavor component so that it provides an initial burst of high intensity burst of flavor in the oral cavity. In this preferred embodiment, the shell portion may or may not also include a small part of the hydrophobic flavor composition and/or flavor oil by itself. In this way, the shell portion will sustain a continual high level of flavor in the oral cavity regardless of what is contained in the core portion. In the same preferred embodiment, the core portion preferably includes at least the hydrophobic flavor composition and is preferably of a softer texture. In order to prepare this core shell compressed tablet, the one half of the shell portion of the tablet is deposited for compression in a compression cavity and is pressed into a tablet half with a center portion having a trough formed therein. Simultaneously or just before the formation of the compressed one half shell, a whole core portion is also compressed and then compression deposited in the cavity formed in the half shell. Thereafter, the remaining shell portion is deposited over the first half with core, and the total tablet is compressed to form a hard confectionery tablet.

The shell portion can be prepared by blending a sweetener/bulking agent with a breath deodorant. The sweetener/bulking agent can be, for example, sugar or sugar alcohol with a high intensity sweetener. An example of a suitable breath deodorant is copper gluconate. A spray-dried flavor is then added and mixing is continued. The spray dried flavor forms the first flavor ingredient. Thereafter, a coloring agent, if necessary, and a lubricant is added and mixed.

Separately, the second phase is prepared which preferably includes a diluent such as, lactose and a lubricant such as magnesium sterate as well as a bonding agent, such a polyethylene glycol. Having formed the two phases they are then combined as previously described and compressed into a tablet offering the multiple range of flavor delivery possibilites.

For example, the artisan can provide any combination of perseption patterns in the oral cavities of flavors and sweeteners. In the preferred embodiment set forth above, the outer shell which includes the hydrophilic flavor provides an initial burst of high intensity flavor and sweetness (when a sweetener is included therein), followed by a sustained high intensity of flavor over a period of time. If, for example, the artisan wishes to reverse the location of the phases, having the hard candy portion serve as a center and carrier for the second phase, the hydrophilic flavor composition could be provided to the second phase. Furthermore, if the first phase (or structural phase), dissipates the hydrophilic portion upon dissolution thereof, an additional hydrophilic flavor could be included in the core portion as well as the hydrophobic ingredient. In this way, a second instantaneous burst of flavor would be provided once the shell is dissolved in the oral cavity. Almost any combination of flavor delivery that can be conceived can be provided by the present invention.

Furthermore, another advantage of the present invention is the ability to provide temperature stability both during product formulation, during shipping, and during storage of the products.

Moreover, the aspect of the invention having separate phases, allows a compressed tablet to be composed of ingredients that might otherwise interact with each other and thus not be suitable for delivery in the same confectionery unit. It is thus possible to prepare a compressed tablet which incorporates normally interactive flavor substances and keeps them substantially separated until the compressed tablet is placed in the oral cavity where it will be dissolved and the flavor ingredients released as intended for the users benefit.

The flavor delivery system of the present invention may be used alone or in combination with conventional flavors, including liquid flavors and optionally with sweeteners included in the flavor components. Furthermore, the present invention includes both sugar-containing and sugarless confectionery compressed tablets, the size and weight of the piece depending on the intended in product. Usually, such tablets weigh in the range of from about 1.5 to about 1.8 grams.

For a better understanding of the present invention, together with other and further objects, reference is made to the following description, taken in conjunction with the accompanying drawings, and its scope will be pointed out in the appended claims.

## BRIEF DESCRIPTION OF THE DRAWINGS

Figure 1 is a graph presenting the results of comparative sensory evaluation testing of a peppermint flavored confectionery compressed tablet containing the inventive flavor delivery system prepared with peppermint, and a control confectionery compressed tablet containing conventional liquid peppermint flavor.

Figure 2 is a perspective view of a confectionery compressed tablet made in accordance with a preferred embodiment of the present invention.

Figure 3 is a cross sectional view of the tablet taken along the line 3-3 of Figure 2, showing a shell first phase substantially enveloping a core second phase.

Figure 4 is a cross sectional view of the tablet hereof taken along the line 4-4 of Figure 2, showing a first phase substantially enveloping a second phase.

Figure 5 is a perspective view of a confectionery compressed tablet prepared in accordance with a second embodiment of the present invention.

Figure 6 is a cross sectional view of the tablet shown in Figure 5.

## DETAILED DESCRIPTION OF THE INVENTION

In accordance with the present invention, a confectionery compressed tablet having flavor ingredients combined therein and providing controlled release thereof in the oral cavity is disclosed. The controlled release of the flavor ingredients contained within the tablets is achieved by providing a compressed confectionery tablet with at least two physical phases and sequential flavor delivery system which offer improved protection and release capabilities for the flavor ingredients. Other benefits may include flavor aroma masking properties, and high temperature and storage stability. The present invention is concerned with a new and highly useful form of confection which provides the user with various flavor possibilities and organoleptic satisfaction.

The compressed tablet accordingly includes:

(a) a first flavor ingredient present in an amount from about 1% to 30% by weight of a hydrophilic composition with which it is intimately bound to provide instantaneous delivery of the active ingredient;

and

(b) a second flavor ingredient present in an amount of from about 3% to 30% by weight of a hydrophobic encapsulating composition so as to provide delivery of the second flavor ingredient over a period of time.

Overall, the confectionery compressed tablet includes flavor components in an amount of from about 0.5% to about 5% by weight of the total weight of the tablet.

Optionally, an emulsifier may be included, in an amount up to about 10% by weight of the hydrophobic encapsulation composition. In the instance where the emulsifiers are employed, suitable emulsifiers include mono-, di- and triglyceride esters of fatty acids, poly glycerol esters and the like. More particularly, the emulsifier may be selected from the group consisting of lecithin, stearates, ester derivatives of stearates, almitate, ester derivatives of palmitate, oleates, ester derivatives of oleates, glycerides, sucrose polyesters, polyglycerolesters, and mixtures thereof. In a preferred embodiment, the emulsifier component may be present in an amount from about 2% to about 7% by weight of the hydrophobic encapsulation composition. In another preferred embodiment, the emulsifier may be present in an amount from about 4% to about 6% by weight.

In accordance with a further embodiment, the present invention may be formulated with a diluent present with and combined with the active ingredient found encapsulated by the hydrophobic composition.

A sweetener can also be added to one or both of the flavor compositions in an amount that may range up to about 30% by weight and preferably from about 12% to about 13% by weight of the encapsulation, to offer a combined sensation of flavor and sweetness.

Suitable sweeteners include the synthetic intense sweeteners such as soluble saccharin salts; cyclamate salts; stevioside; glycyrrhizin, dipotassium glycyrrhizin, and glycyrrhizic acid ammonium salt; N-L-alpha-Aspartyl-L-phenylalanine 1-methyl ester (Aspartame); potassium salt of 6-methyl-1,2,3-oxathiazin-4-(3H)-one-2,2-dioxide (Acesulfame-K, a commercially available product of Hoechst Celanese Corporation, Somerville, New Jersey); 4,1',6',-Trichloro-4,1',6'-trideoxygalactosucrose (Sucralose, a commercially available product of McNeil Specialty Products Company, Skillman, New Jersey); L-alpha-Aspartyl-N-(2,2,4,4-tatramethyl-3-thietanyl)-D-alaninamide hydrate (Alitame, a commercially available product of Pfizer, New York, New York); and thaumatin (Talin).

The above sweeteners and similar intense sweeteners not listed above often present special problems when they are included in ingestible products. For example, certain sweeteners present stability problems, such as Aspartame which breaks down into potentially toxic byproducts in the presence of aldehydes, ketones, moisture and the like. Similarly, other sweeteners exhibit a bitter aftertaste or off-note, such as Saccharin (a commercially available product of PMC Specialty Group Inc., Cincinnati, Ohio), Stevioside, Acesulfame-K, glycyrrhizin and its salts, and Talin. The incorporation of the aforenoted sweeteners into the present sequential delivery system overcomes the prior drawbacks to their use, as the stability and taste-masking capability of the present delivery system provides the necessary protection for these intense sweeteners and improves and enhances their sweetness sensation in ingestible products.

Useful flavoring agents may be chosen from synthetic flavoring liquids such as synthetic flavor oils and flavoring aromatics and/or oils; and/or liquids, oleoresin or extracts derived from plants, leaves, flowers, fruits, etc., and combinations thereof. Preferably, the flavor component is selected from spearmint oil, cinnamon oil, oil of wintergreen (methylsalicylate) and peppermint oil, clove oil, bay oil, anise oil, eucalyptus oil, thyme oil, cedar leaf oil, oil of nutmeg, allspice, oil of sage, mace, oil of bitter almonds, and cassia oil. Also useful are artificial, natural or synthetic flavors including fruit flavors such as vanilla, and citrus oils including lemon, orange, grape, lime and grapefruit and fruit essences including apple, pear, peach, grape, strawberry, raspberry, cherry, plum, pineapple, apricot and so forth.

Materials suitable for the preparation of the hydrophobic coating component include the fats and/or waxes. Suitable fats include fatty acids such as hydrogenated or partially hydrogenated oils, with representative materials comprising palm oil, palm kernel oil, soybean oil, cottonseed oil, peanut oil, rapeseed oil, rice bran oil, sunflower oil, safflower oil, and mixtures thereof. Other materials also useful as fats herein may be selected from monoglycerides, diglycerides, triglycerides, polyglycerol esters, sorbitol esters, and mixtures thereof.

Suitable waxes include natural waxes, synthetic waxes, and mixtures thereof, and in particular, comprise materials selected from the group consisting of paraffin wax, beeswax, carnauba wax, candelilla wax, lanolin wax, bayberry wax, sugar cane wax, petrolatum, carbowax, spermaceti wax, rice bran wax, microcrystalline wax, and mixtures thereof. Naturally the foregoing is illustrative and not restrictive of suitable materials for inclusion in the delivery system of the invention, and the invention is considered to extend to unnamed equivalent materials within its scope.

The present invention includes both sugar-containing and sugarless confectionery compressed tablets.

7

In the instance where sweeteners are utilized in addition to those that may be included in the encapsulation system, the present invention contemplates the inclusion of those sweeteners well known in the art, including both natural and artificial sweeteners. Thus, additional sweeteners may be chosen from the following non-limiting list: sugars such as sucrose, glucose (corn syrup), dextrose, invert sugar, fructose, and mixtures thereof, saccharine and its various salts such as the sodium or calcium salt; cyclamic acid and its various salts such as the sodium salt; the dipeptide sweeteners such as aspartame; dihydrochalcone compounds, glycyrrhizin; Stevia Rebaudiana (Stevioside); chloro derivatives of sucrose; dihydroflavinol; hydroxyguaiacol esters; L-amino dicarboxylic acid gem-diamines; L-aminodicarboxylic acid aminoalkenoic acid ester amides; and sugar alcohols such as sorbitol, sorbitol syrup, mannitol, xylitol, and the like. Also contemplated as an additional sweetener is the nonfermentable sugar substitute (hydrogenated starch hydrolysate) which is described in U.S. Reissue Patent No. 26,959. Also contemplated is the synthetic sweetener 3,6-dihydro-6-methyl-1-1,2,3-oxathiazin-4-one-2,2-dioxide, particularly the potassium (acesulfame-K), sodium and calcium salts thereof as described in German Patent No. 2,001,017.7.

Suitable auxiliary flavorings including both natural and artificial flavors, and mints such as peppermint, menthol, artificial vanilla, cinnamon, various fruit flavors, both individual and mixed, and the like are contemplated. Such flavorings are generally utilized in amounts that will vary depending upon the amount of the flavor encapsulation delivery system employed and may, for example, range in amounts of up to about 5% by weight of the final compressed tablet composition weight. Thus the auxiliary flavorings may be present in the encapsulated flavor delivery system, and, optionally, in the compressed tablet composition itself.

The color which is added as blends can be incorporated in amounts of from about 1% by weight to about 6% by weight. Also, the colorants may include other dyes suitable for food, drug and cosmetic applications, and known as FD&C dyes and the like. The materials acceptable for the foregoing spectrum of use are preferably water-soluble. Illustrative examples include indigoid dye, known as FD&C Blue No. 2, which is the disodium salt of 5,5'-indigotindisulfonic acid. Similarly, the dye known as FD&C Green No. 1 comprises a triphenylmethane dye and is the monosodium salts of 4-[4-N-ethyl-p-sulfobenzylamino)-diphenylmethylene]-[1-(N-ethyl-N-p-sulfoniumbenzyl)-2-5-cyclohexadieneimine].A full recitation of all FD&C and D&C dyes and their corresponding chemical structures may be found in the Kirk-Othmer Encyclopedia of Chemical Technology, in Volume 5, pages 857-884, which is incorporated herein by reference.

With respect to confectionery compressed tablet formulations, such will contain a tablet granulation base and various additives, such as sweeteners and flavors. The tablet granulation base employed will vary depending on various factors such as the type of base used, friability desired and other components used to make the final product. The confectionery compressed tablet may additionally include the conventional additives of flavoring agents, coloring agents, emulsifiers and additional fillers. The variations that one may practice with regard to these confections are wide ranging and within the ability of those skilled in the art particularly with regard to the use of additional composition fillers, flavoring components, use of coloring agents, etc.

Ingredients which are sensitive to moisture and subject to deterioration in the presence of moisture, will particularly benefit from the present invention since they can be protected for extended periods of time. Furthermore, in the case of having a need to affect controlled release of a flavor and/or sweetener with an off-taste, the present invention is very effective since release can be directly related to necessary composition proportions. Thus, a flavor ingredient having, for example, a very bitter taste can be administered to an individual by simply providing a controlled release which is at such a low level that it does not adversely affect the perception by the consumer. A further use is to provide sustained release of a high-intensity sweetener at a very low concentration such that even without increasing the overall amount of the sweetener, the perception by the consumer of, for example, a confectionery compressed tablet composition can be sustained over a prolonged period of time.

A representative process for preparing a confectionery compressed tablet composition which includes the inventive sequential delivery system is as follows:

Initially, a first phase which is structurally supportive of the compressed tablet is prepared. The sweetener/bulking agent are blended for a sufficient time, for example, 5 minutes. Next, a breath deodorant such as copper gluconate is added and mixed with the above ingredients for 3 minutes to obtain sufficient dispersion of the ingredients. A spray dried flavor such as peppermint, for example, is then added to the ingredients set forth above and blending is continued. It has been found that 3 minutes of additional mixing is sufficient to incorporate the spray dried flavor. Thereafter, a coloring agent, if necessary, and a lubricant are added and blended with the abovementioned ingredients. For example, it has been found that coloring agents and lubricants are sufficiently dispersed in the mixture after blending for 2 minutes.

Separately, at least a second phase which contains hydrophobically encapsulated flavor is prepared by first blending a diluent with a lubricant for about three minutes. Next, a bonding agent is added and mixed for about two minutes. The hydrophobically encapsulated flavor is then added and mixing is continued for about two minutes more to complete the preparation of the phase. The phases are thereafter compressed separately in a tablet compression machine to provide the confectionery compressed tablets of the present invention.

In the case of a core-shell table, the core is compressed for placement in the shell portion. A first half of the shell portion is deposited and compressed in a tablet dye. The previously-compressed core is placed thereon followed by a subsequent deposition of the remaining shell material thereover. The entire tablet composite is then compressed into a two phase product in accordance with the present invention.

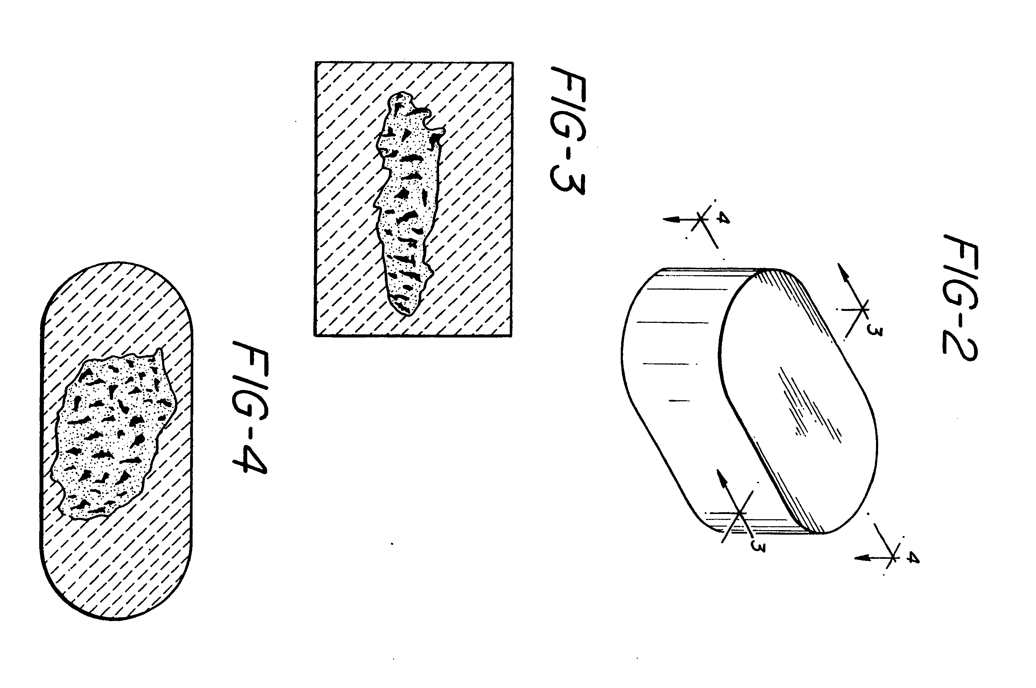

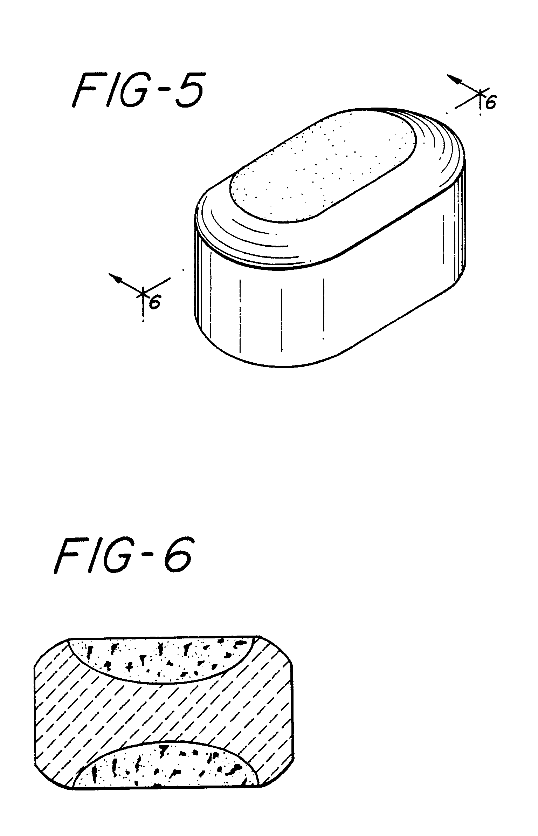

Referring now to Figures 3-5 an example of a possible embodiment of confectionery compressed tablets which can be made in accordance with the invention is shown. The common characteristic of such products is that they each comprise at least two discrete phases and the first phase is structurally supportive of a compressed tablet shape and substantially envelopes the second phase which is present as a core. The depicted forms all have a generally circular planar profile body shape, being, e.g., cylindrical, but it will be understood that other shapes are contemplated. Figures 6 and 7 show another embodiment of the present invention wherein the first phase is generally the middle and circumferential portion and the second phase has been fixed on either sides. The resulting tablet has a cross-section as shown in Figure 6.

The hydrophilic composition may be prepared by spray drying techniques which are well known in the art. In this procedure, a flavor oil is usually blended with a film forming agent dispersed in water and then emulsified to form a stable emulsion. Emulsification is necessary because flavor oils are insoluble in the water needed to dissolve the film forming agent. Obtaining an emulsion of low viscosity, at high solids content, is critical to producing an acceptable product. Stability at higher temperatures is also critical to avoid volatilization of the flavor oil. Maintaining low inlet temperatures (i.e., around 155° C) as well as minimizing the residence time in the dryer are beneficial if the flavor is chemically unstable. Air drying conditions depend on the emulsion and product characteristics such as particle size of the product required. Modifications to the use of heat to remove the water from the emulsion have also been attempted. Some of these include the use of a dehydrating solvent as the drying medium rather than hot air. Freeze drying has also been contemplated.

The flavor encapsulated within the hydrophobic coating component may be combined with a diluent, lubricant, and/or bonding agent. Such agents are well known in the art. For example, diluents may include lactose, avicel microcrystalline cellulose NF, or starch. Lubricants, for example, include stearic acid or magnesium stearate. Polyethylene glycol is an example of a suitable bonding agent.

It will be seen that the present invention readily lends itself to employment in appealing variations of numerous combinations of colors in the separate phases of the compressed tablet and also in variations in the compositional makeup of the compressed tablet to evoke various and different pleasant organoleptic effects when the consumer dissolves a tablet in the oral cavity. In a preferred embodiment, the compressed coated tablet releases two or more flavors by having a different flavor in the first phase being released initially, and a mint breath freshening flavor in the second phase which is released over a period of time.

It will be seen from the foregoing description that there is provided a highly advantageous confectionery compressed tablet. Those skilled in the art will understand that certain variations and modifications can be made in respect of what has been disclosed herein and still be within the scope of the inventive concept disclosed.

The foregoing description is offered by way of illustration and in fulfillment of applicants' duty to disclose the best mode for the practice of the invention. Accordingly, the above procedures may be modified within the skill of the art, and all such modifications are contemplated herein and made a part hereof.

The process of spray congealing as used herein refers to feeding of the second homogeneous mixture through a heat controlled spray nozzle, and the formation of atomized liquid droplet within a closed, temperature regulated chamber, so that the droplets cool and solidify upon contacting the cooler temperature of the surrounding atmosphere, which may, for example, be on the order of 25° C. The nozzle pressure is regulated to control particle droplet size, and droplets cool and congeal once they are emitted from the nozzle and contact the cooler environment. The result of this process is a dry particle or agglomerate which may have an approximate elliptical or spherical shape.

EXAMPLES

The following examples serve to provide further appreciation of the invention but are not meant in any way to restrict the effective scope of the invention.

EXAMPLE 1

Sugarless confectionery compressed tablets with the novel multiple phased sequential delivery system were prepared using a peppermint flavor and subjected to comparative testing and sensory evaluation. Five sugarless confectionery compressed tablet samples made in accordance with the present invention were prepared with peppermint flavor as set forth in Table I, below. A control sugarless confectionery compressed tablet with liquid peppermint flavor was also prepared.

### TABLE 1

Sugarless Confectionery Compressed Tablets With Phased Sequential Delivery Systems

| Ingredients (wt.%) | Control I | A | B | C | D | E |
|---|---|---|---|---|---|---|
| **First Phase (Shell)** | | | | | | |
| Sorbitol | 95.55 | 94.68 | 94.477 | 94.171 | 93.00 | 89.50 |
| Breath Deodorant (Copper Gluconate) | 0.75 | 0.761 | 0.789 | 0.833 | 1.00 | 1.50 |
| Color Mix | 3.00 | 3.04 | 3.157 | 3.33 | 4.00 | 6.00 |
| Lubricant | 0.30 | 0.304 | 0.315 | 0.333 | 0.40 | 0.60 |
| Spray Dried Flavor (20% Flavor) | — | 1.013 | 1.052 | 1.111 | 1.33 | 2.00 |
| Liquid Flavor (Peppermint) | 0.20 | — | — | — | — | — |
| Sweetener (Aspartame) | 0.20 | 0.202 | 0.210 | 0.222 | 0.27 | 0.40 |
| **Second Phase (Core)** | | | | | | |
| Encapsulation (15% Flavor) | — | 100. | 26.60 | 13.30 | 5.32 | 2.66 |
| Diluent | — | — | 72.90 | 86.00 | 93.78 | 96.24 |
| Lubricant | — | — | 0.30 | 0.40 | 0.50 | 0.60 |
| Bonding Agent | — | — | 0.20 | 0.30 | 0.40 | 0.50 |
| Weight Distribution Ratio of Tablet (First Phase/Second Phase) | 100/0 | 98.67/1.33 | 95/5 | 90/10 | 75/25 | 50/50 |

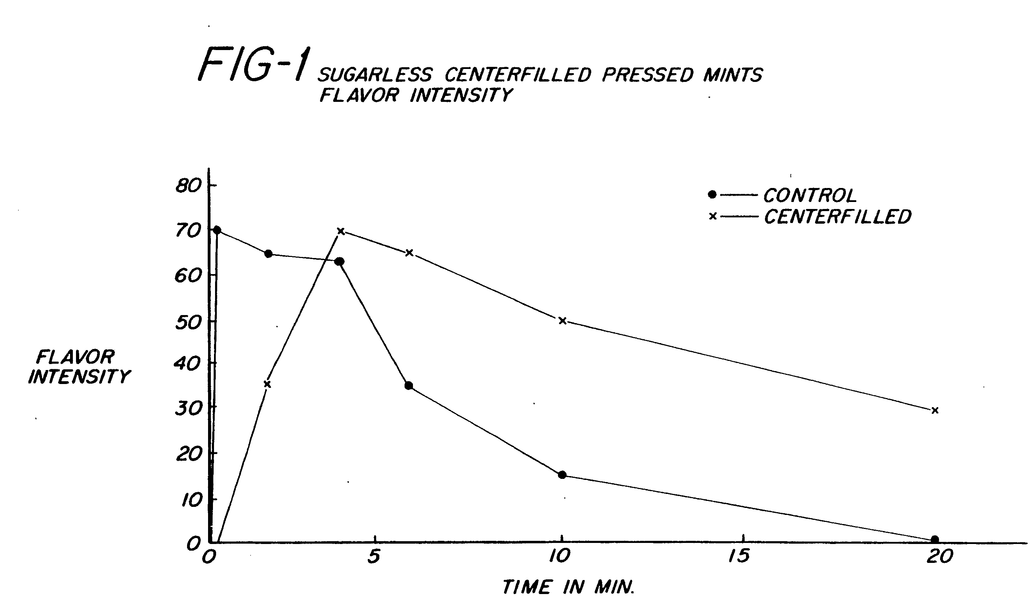

The above compositions were prepared in accordance with the method described hereinabove in the individual proportions as set forth in Table I, above. The Control and Sample A were then subjected to testing for sensory evaluation. The results of the sensory evaluation are set forth in Figure 1.

Referring to Figure 1, the results of the evaluation demonstrate an unexpected improvement in both flavor intensity and longevity of flavor delivery attributable to the present invention, which could not possibly be achieved by inclusion of the same amount of flavor or even by the addition of a greater amount of flavorant or by using fat encapsulated flavor alone. In particular, Figure 1 shows the present invention to be unlike the Control which exhibited a rapid decline in flavor intensity. The present invention clearly shows superior delivery of heightened flavor perception throughout the consumption period. The exceptional results achieved by the present invention provide a means by which the artisan is able to engineer a sequential release of actives such as flavorants to the oral cavity in distinct phases. The exquisite control provided by the present invention enables the practitioner to selectively incorporate actives suitable for release in the oral cavity which would otherwise be incompatible.

A desirable ratio by weight of a first phase present as a shell to the second phase present as a core was found to be 98.67 to 1.33, as represented by Sample A. The other inventive formulations, B, C, D and E, also achieved favorable results for both flavor intensity and longevity of flavor delivery.

EXAMPLE 2

In this example, the confectionery compressed tablets of the present invention were prepared with a peppermint flavor and incorporated into several sugar-containing samples to compare the attributes of the present invention to a control sample. The inventive tablets were prepared in a similar manner to those in Example 1. Accordingly, two control samples labeled II and III respectively and inventive samples F, G, H, I, J, K and L respectively were formulated. The formulas of the respective compositions are set forth in Tables IIa and IIb below. The control compositions were prepared in the conventional manner. Control II contained only liquid flavor and Control III contained only spray dried flavor. The various formulations were thereafter subjected to testing for sensory evaluation.

## TABLE II a

### CONTROL FORMULATIONS FOR SENSORY EVALUATION TEST WITH SUGARED CONFECTIONERY COMPRESSED TABLETS CONTAINING PHASED SEQUENTIAL DELIVERY SYSTEMS

| INGREDIENTS (WT %) | CONTROL II | CONTROL III |
|---|---|---|
| Sugar | 98.8556 | 98.198 |
| Pressed Copper Gluconate | 0.750 | 0.750 |
| Lubricant | 0.230 | 0.230 |
| Liquid Flavor | 0.1644 | ------ |
| Spray Dried Flavor (20% Flavor) | ------ | 0.822 |
| Core | ------ | ------ |
| Weight Distribution Ratio of Tablet 1st Phase/2nd Phase | ------ | ------ |

EP 0 437 098 A2

## TABLE II b

### SUGARED CONFECTIONERY TABLETS CONTAINING PHASED SEQUENTIAL DELIVERY SYSTEMS

| INGREDIENTS (WT %) PER PHASE | F | G | H | I | J | K | L |
|---|---|---|---|---|---|---|---|
| **FIRST PHASE** | | | | | | | |
| Sugar | 98.8556 | 98.8556 | 98.198 | 99.02 | 99.02 | 99.02 | 99.02 |
| Pressed Copper Gluconate | 0.75 | 0.75 | 0.75 | 0.75 | 0.75 | 0.75 | 0.75 |
| Lubricant | 0.23 | 0.23 | 0.23 | 0.23 | 0.23 | 0.23 | 0.23 |
| Liquid Flavor | 0.1644 | 0.1644 | — | — | — | — | — |
| Spray Dried Flavor (20% Flavor) | — | — | 0.822 | — | — | — | — |
| **SECOND PHASE** | | | | | | | |
| Encapsulated Flavor (15% Flavor) | 100.00 | 26.304 | 26.304 | 26.304 | 13.152 | 5.2608 | 2.6304 |
| Diluent | — | 73.196 | 73.196 | 73.196 | 86.148 | 93.8398 | 96.2696 |
| Lubricant | — | 0.300 | 0.300 | 0.300 | 0.40 | 0.50 | 0.60 |
| Bonding Agent | — | 0.200 | 0.200 | 0.200 | 0.30 | 0.40 | 0.50 |
| Tablet Weight Distribution Ratio First Phase/ Second Phase | 98.68/ 1.32 | 95/5 | 95/5 | 95/5 | 90/10 | 75/25 | 50/50 |

In results similar to those obtained in Example I, it was found that the sugar-containing confectionery compressed tablets demonstrated an unexpected improvement in both flavor intensity and longevity of flavor delivery attributable to the present invention's sequential phased delivery system.

The results of the sensory evaluation demonstrate the surprising improvement in initial flavor burst, flavor intensity and longevity of flavor delivery attributable to the present invention and which could not be achieved merely by the addition of a greater amount of free liquid flavor or by using fat encapsulated flavor alone. A desirable combination of initial flavor burst, greater overall intensity and extension was achieved by the combination of free liquid peppermint flavor and the present flavor delivery system as illustrated by Samples G or H. Both inventive formulations delivered heightened levels of flavor for approximately twenty minutes and continued to delivery flavor with unexpected intensity for the same period of time.

It has been empirically determined that compressed tablets made in accordance with the present invention exhibit accentuated initial flavor bursts and heightened flavor intensity throughout the extensive consumption period. Such properties have been heretofore unattainable in prior art compressed tablet formulations. Further, the results also demonstrate the superiority of the confectionery compressed tablets made in accordance with the present invention over confectionery compressed tablets of the prior art.

Example 3

Other samples of the present invention were prepared in accordance with the procedures set forth above using the formulations set forth in table IIIa, b, and c. Samples M, N and O are a sugar-containing confectionery tablets prepared with a centerfill and shown in Figures 3, 4 and 5, Samples P, Q, R and S are peppermint flavor sugar-containing tablets while Samples T and V are cherry flavored sugar-containing confectionery tablets prepared in accordance with the present invention.

### TABLE III a

**SUGARED CONFECTIONERY TABLETS - CENTER FILLED**

**CINNAMON FLAVOR**

| | M | N | O |
|---|---|---|---|
| **SHELL 1.503 G** | % | % | % |
| Sugar | 95.01 | 95.01 | 95.01 |
| Breath Deodorant | 0.75 | 0.75 | 0.75 |
| Lubricant | 0.24 | 0.24 | 0.24 |
| Flavor Beads (8% Flavor) | 4.00 | 4.00 | 4.00 |
| | 100.00 | 100.00 | 100.00 |
| **CORE 0.167 G** | % | % | % |
| Encapsulated Flavor (12.5% Flavor) | 42.72 | 42.72 | 42.72 |
| Spray Dried Flavor (20% Flavor) | 4.00 | 4.00 | 6.00 |
| Lubricant | 0.24 | 0.24 | 0.24 |
| Glidant (Silicon Dioxide) | 1.00 | 1.00 | 1.00 |
| Binder | 1.00 | 1.00 | 1.00 |
| Xanthan Gum | 51.04 | — | 49.04 |
| Methocel | — | 25.52 | — |
| Ethocel | — | 25.52 | — |
| | 100.00 | 100.00 | 100.00 |

EP 0 437 098 A2

## TABLE III b
## SUGARED CONFECTIONERY TABLETS – CENTER FILLED
## PEPPERMINT FLAVOR

| | P | Q | R | S |
|---|---|---|---|---|
| **SHELL   1.503 G** | % | % | % | % |
| Sugar | 97.6724 | 97.6724 | 97.6724 | 97.6724 |
| Breath Deodorant | 0.75 | 0.75 | 0.75 | 0.75 |
| Lubricant | 0.23 | 0.23 | 0.23 | 0.23 |
| Liquid Flavor | 0.0676 | 0.0676 | 0.0676 | 0.0676 |
| Flavor Beads (8% Flavor) | 1.280 | 1.280 | 1.280 | 1.280 |
| | 100.00 | 100.00 | 100.00 | 100.00 |
| **CORE   0.167 G** | % | % | % | % |
| Encapsulated Flavor (12.5% Flavor) | 26.72 | 26.72 | 40.00 | 40.00 |
| Spray Dried Flavor (20% Flavor) | —— | —— | 2.00 | 2.00 |
| Sweetener Core (400 ppm) (32% Sweetener) | —— | 0.125 | 0.125 | 0.125 |
| Glidant (Silicon Dioxide) | 1.00 | 1.00 | 1.00 | 1.00 |
| Binder | 1.00 | 1.00 | 1.00 | 1.00 |
| Lubricant | 0.23 | 0.23 | 0.23 | 0.23 |
| Xanthan Gum | 71.05 | 70.925 | 55.645 | —— |
| Methocel Gum (Hydroxy Propymethyl Cellulose) | —— | —— | —— | 27.8225 |
| Klucel Gum (Hydroxy Propy Cellulose) | —— | —— | —— | 27.8225 |
| | 100.00 | 100.00 | 100.00 | 100.00 |

**TABLE III C**

**SUGARED CONFECTIONERY TABLETS – CENTER FILLED**

**CHERRY FLAVOR**

| | II (%) | V (%) |
|---|---|---|
| **SHELL 1.503 G** | | |
| Sugar | 96.56 | 96.56 |
| Breath Deodorant | 0.75 | 0.75 |
| Lubricant | 0.24 | 0.24 |
| Flavor Beads | 2.20 | 2.20 |
| | 100.00 | 100.00 |
| **CORE 0.167 G** | | |
| Encapsulated Flavor | 23.00 | 23.00 |
| Spray Dried Flavor | 4.00 | 4.00 |
| Lubricant | 0.24 | 0.24 |
| Glidant | 1.00 | 1.00 |
| Binder | 1.00 | 1.00 |
| Sweetener Core (400 ppm) | 0.125 | 0.125 |
| Xanthan Gum | 70.635 | — |
| Methocel | — | 35.3175 |
| Ethocel | — | 35.3175 |
| | 100.00 | 100.00 |

The ineluctable conclusion is that the compressed tablets made in accordance with the present invention which exhibit accentuated initial flavor bursts and heightened flavor intensity throughout the consumption period can be refined and engineered to provide virtually any desired release pattern in the oral cavity. Further, the present invention's ability to provide sequential release of active ingredients in separate phases within the same tablet is unique. Such properties have been heretofore unattainable in prior art compressed tablets.

This invention may be embodied in other forms or carried out in other ways without departing from the spirit or essential characteristics thereof. The present disclosure is therefore to be considered as in all respects illustrative and not restrictive, the scope of the invention being indicated by the appended claims, and all changes which come within the meaning and range of the equivalency are intended to be embraced therein.

**Claims**

1. A compressed tablet having at least two distinct physical phases and provided with selective timed delivery of flavour ingredients to the oral cavity, comprising:
   (a) a first phase which provides a physical structure for the tablet,
   (b) a second phase which provides a mouthfeel which is texturally different from the first phase,
   (c) a first flavour ingredient intimately bound in a hydrophilic composition for instantaneous delivery of the first ingredient to the oral cavity, and forming part of one of the first phase, the second phase and both the first and second phases, and
   (d) a second flavour ingredient encapsulated in a hydrophobic composition for timed delivery of the second ingredient to the oral cavity, and forming part of one of the first phase, the second phase and both the first and second phases;
   whereby selected flavour-delivery sequences are provided by inclusion of the first ingredient and the second ingredient in one or more of the phases.

2. A compressed tablet according to claim 1, wherein the first and said second flavour ingredients are the same or are different.

3. A compressed tablet according to claim 1 or 2, wherein the first and said second flavour ingredients are selected from the group consisting of flavours, sweeteners, and mixtures thereof.

4. A compressed tablet according to claim 3, wherein the flavours are selected from spearmint oil, cinnamon oil, oil of wintergreen (methylsalicylate), peppermint oil, lemon oil, orange oil, grape oil, lime oil, grapefruit oil, apple essence, strawberry essence, cherry essence, pineapple essence, banana oil and mixtures thereof.

5. A compressed tablet according to claim 3 or 4, wherein the flavour is present in an amount of from 0.05% to 5%, preferably 0.15 to 0.3%, by weight of the total weight of the tablet.

6. A compressed tablet according to claim 3, 4 or 5, wherein the sweetener is selected from amino acid-based sweeteners, dipeptide sweeteners, glycyrrhizin, saccharine and its salts, acesulfame salts, cyclamates, steviosides, talin, sucrulose, dihydrochalcone compounds and mixtures thereof; and/or is present in an amount from 200 to 3000 parts per million.

7. A compressed tablet according to any preceding claim, wherein the hydrophilic composition comprises an ingredient selected from polymers, gelatin, natural gums, and confectionery compressed tablet granulation material.

8. A compressed tablet according to claim 7, in which the confectionery compressed tablet granulation material contains sugar or is sugarless.

9. A compressed tablet according to any preceding claim, wherein the hydrophilic composition is combined with a bulking agent.

10. A compressed tablet according to any preceding claim, wherein the hydrophobic composition includes an emulsifier which is preferably present in an amount of up to 10% by weight, more preferably from 2% to 7% by weight, and most preferably from 4% to 6% by weight, of the encapsulation composition.

11. A compressed tablet according to claim 10, wherein the emulsifier is selected from monoglycerides, diglycerides and triglycerides of fatty acids, polyglycerol esters and mixtures thereof, and/or from lecithin, stearates, ester derivatives of stearates, palmitates, oleates, ester derivatives of oleates, glycerides, sucrose polyesters, polyglycerol esters and mixtures thereof.

12. A compressed tablet according to any preceding claim, wherein the hydrophobic composition comprises a component selected from fat, wax, resin and mixtures thereof.

13. A compressed tablet according to claim 12, wherein the fat is selected from hydrogenated and partially hydrogenated oils, which are preferably palm oil, palm kernel oil, soybean oil, cottonseed soil, peanut oil, rapeseed oil, rice bran oil, sunflower oil, safflower oil, and mixtures thereof.

14. A compressed tablet according to claim 13, wherein the fat is selected from monoglycerides, diglycerides, triglycerides, polyglycerol esters, sorbitol esters, and mixtures thereof.

15. A compressed tablet according to claim 12, 13 or 14, wherein the wax is selected from natural waxes, synthetic waxes and mixtures thereof, and is preferably paraffin wax, beeswax, carnauba wax, candelilla wax, lanolin wax, bayberry wax, sugar cane wax, petrolatum, carbowax, spermaceti wax, rice bran wax, micrccrystalline wax, and mixtures thereof.

16. A compressed tablet according to any one of claims 12 to 15, wherein the hydrophobic ingredient includes fat in an amount of from 50% to 85% by weight of the hydrophobic composition and the flavour present in an amount of from 5% to 20% of said hydrophobic composition; or wherein the hydrophobic ingredient includes wax in an amount of from 45% to 85% by weight and the flavour is present in an amount of from 3% to 30% by weight; or wherein the hydrophobic ingredient includes a fat/wax combination wherein the fat is present in an amount of from 5 to 85 and the wax is present in an amount of from 5 to 70, and the flavour if present in an amount of from 5 to 30; or wherein the hydrophobic ingredient includes a fat and resin combination wherein the fat is present in an amount of from 50% to 84% and the resin is present in an amount of from 10% to 20% by weight, and the flavour is present in an amount of from 5% to 25% by weight; or wherein the hydrophobic ingredient includes a wax/resin combination wherein the wax is present in an amount of from 45% to 85% by weight and the resin is present in an amount of from 10% to 20% by weight, and the flavour is present in an amount of from 5% to 30% by weight; or wherein the hydrophobic ingredient is present in fat/wax/resin combination wherein the fat is present in an amount of from 30% to 75% by weight, the wax is present in an amount of from 20% to 25% by weight and the resin is present in an amount of from 10% to 25% by weight, and the flavour is present in an amount of from 5% to 30% by weight.

17. A compressed tablet according to any preceding claim, wherein the hydrophobic composition is combined with a diluent.

18. A compressed tablet according to any preceding claim, wherein the first phase substantially envelopes the second phase.

19. A compressed tablet according to any preceding claim, wherein the first flavour is included in the first phase and the second flavour is included in the second phase; or wherein the first flavour and the second flavour are incorporated in the first phase and the second flavour is incorporated in the second phase; or wherein the second flavour is incorporated in the first phase and the first flavour is incorporated in the second phase; or wherein the first and second flavours are incorporated in the first phase and the first and the second flavours are incorporated in the second phase; or wherein the first flavour is incorporated in the first phase and the first and second flavours are incorporated in the second phase; or wherein the second flavour is incorporated in the first phase and the first and second flavours are incorporated in the second phase.

20. A compressed tablet according to any one of claims 1 to 18, wherein the first and second flavour ingredients are uniformly dispersed within the tablet.

21. A compressed tablet according to claim 1, wherein the first phase further comprises a binder, which is preferably selected from gelatin, natural gums, cellulose derivatives, avicel microcrystalline cellulose, NF, starch, polyvinylpyrrolidone povidone, sodium alginate, polyethylene glycols, corn syrup, sucrose, lactose, mannitol and dicalcium phosphate dihydrate.

22. A compressed tablet according to any preceding claim, wherein the second phase includes a diluent, which is preferably selected from lactose, avicel microcrystalline cellulose, NF, starch, dextrose, mannitol and calcium sulfate.

23. A compressed tablet according to any preceding claim, further comprising a lubricant, which is preferably selected from metallic stearates, stearic acid, hydrogenated vegetable oils, talc, corn starch, polyethylene glycols, sodium benzoate and sodium acetate.

24. A process for preparing a confectionery compressed tablet having flavour ingredients combined therein for controlled delivery to the oral cavity, comprising the steps of:
  (a) preparing a first flavour ingredient intimately bound in a hydrophilic composition for instantaneous delivery of the first ingredient to the oral cavity;
  (b) preparing a second flavour ingredient encapsulated in a hydrophobic composition for timed delivery of the second ingredient to the oral cavity;
  (c) preparing a first phase structurally supportive of the tablet and including one of the flavour compositions resulting from steps (a) and (b) above, or both;
  (d) preparing at least a second phase which provides a mouthfeel which is texturally different from that of the first phase and including one of the flavour compositions resulting from steps (a) and (b) above, or both; and
  (e) forming a compressed tablet from the combination resulting from step (d) above.

Claims for the following Contracting State ES:

1. A process for preparing a confectionery compressed tablet having flavour ingredients combined therein for controlled delivery to the oral cavity, comprising the steps of:
  (a) preparing a first flavour ingredient intimately bound in a hydrophilic composition for instantaneous delivery of the first ingredient to the oral cavity;
  (b) preparing a second flavour ingredient encapsulated in a hydrophobic composition for timed delivery of the second ingredient to the oral cavity;

(c) preparing a first phase structurally supportive of the tablet and including one of the flavour compositions resulting from steps (a) and (b) above, or both;

(d) preparing at least a second phase which provides a mouthfeel which is texturally different from that of the first phase and including one of the flavour compositions resulting from steps (a) and (b) above, or both; and

(e) forming a compressed tablet from the combination resulting from step (d) above.

2. A process according to claim 1, the first and said second flavour ingredients are selected from the group consisting of flavours, sweeteners, and mixtures thereof.

3. A process according to claim 1 or 2, wherein the first and said second flavour ingredients are selected from the group consisting of flavours, sweeteners, and mixtures thereof.

4. A process according to claim 3, wherein the flavours are selected from spearmint oil, cinnamon oil, oil of wintergreen (methylsalicylate), peppermint oil, lemon oil, orange oil, grape oil, lime oil, grapefruit oil, apple essence, strawberry essence, cherry essence, pineapple essence, banana oil and mixtures thereof.

5. A process according to claim 3 or 4, wherein the flavour is present in an amount of from 0.05% to 5%, preferably 0.15 to 0.3%, by weight of the total weight of the tablet.

6. A process according to claim 3, 4 or 5, wherein the sweetener is selected from amino acid-based sweeteners, dipeptide sweeteners, glycyrrhizin, saccharine and its salts, acesulfame salts, cyclamates, steviosides, talin, sucrulose, dihydrochalcone compounds and mixtures thereof; and/or is present in an amount from 200 to 3000 parts per million.

7. A process according to any preceding claim, wherein the hydrophilic composition comprises an ingredient selected from polymers, gelatin, natural gums, and confectionery compressed tablet granulation material.

8. A process according to claim 7, in which the confectionery compressed tablet granulation material contains sugar/or is sugarless.

9. A process according to any preceding claim, wherein the hydrophilic composition is combined with a bulking agent.

10. A process according to any preceding claim, wherein the hydrophobic composition includes an emulsifier which is preferably present in an amount of up to 10% by weight, more preferably from 2% to 7% by weight, and most preferably from 4% to 6% by weight, of the encapsulation composition.

11. A process according to claim 10, wherein the emulsifier is selected from monoglycerides, diglycerides and triglycerides of fatty acids, polyglycerol esters and mixtures thereof, and/or from lecithin, stearates, ester derivatives of stearates, palmitates, oleates, ester derivatives of oleates, glycerides, sucrose polyesters, polyglycerol esters and mixtures thereof.

12. A process according to any preceding claim, wherein the hydrophobic composition comprises a component selected from fat, wax, resin and mixtures thereof.

13. A process according to claim 12, wherein the fat is selected from hydrogenated and partially hydrogenated oils, which are preferably palm oil, palm kernel oil, soybean oil, cottonseed soil, peanut oil, rapeseed oil, rice bran oil, sunflower oil, safflower oil, and mixtures thereof.

14. A process according to claim 13, wherein the fat is selected from monoglycerides, diglycerides, triglycerides, polyglycerol esters, sorbitol esters, and mixtures thereof.

15. A process according to claim 12, 13 or 14, wherein the wax is selected from natural waxes, synthetic waxes and mixtures thereof, and is preferably paraffin wax, beeswax, carnauba wax, candelilla wax, lanolin wax, bayberry wax, sugar cane wax, petrolatum, carbowax, spermaceti wax, rice bran wax, microcrystalline wax, and mixtures thereof.

16. A process according to any one of claims 12 to 15, wherein the hydrophobic ingredient includes fat in an amount of from 50% to 85% by weight of the hydrophobic composition and the flavour present in an amount of from 5% to 20% of said hydrophobic composition; or wherein the hydrophobic ingredient includes wax in an amount of from 45% to 85% by weight and the flavour is present in an amount of from 3% to 30% by weight; or wherein the hydrophobic ingredient includes a fat/wax combination wherein the fat is present in an amount of from 5 to 85 and the wax is present in an amount of from 5 to 70, and the flavour if present in an amount of from 5 to 30; or wherein the hydrophobic ingredient includes a fat and resin combination wherein the fat is present in an amount of from 50% to 84% and the resin is present in an amount of from 10% to 20% by weight, and the flavour is present in an amount of from 5% to 25% by weight; or wherein the hydrophobic ingredient includes a wax/resin combination wherein the wax is present in an amount of from 45% to 85% by weight and the resin is present in an amount of from 10% to 20% by weight, and the flavour is present in an amount of from 5% to 30% by weight; or wherein the hydrophobic ingredient is present in fat/wax/resin combination wherein the fat is present in an amount of from 30% to 75% by weight, the wax is present in an amount of from 20% to 25% by weight and the resin is present in an amount of from 10% to 25% by weight, and the flavour is present in an amount of from 5% to 30% by weight.

17. A process according to any preceding claim, wherein the hydrophobic composition is combined with a diluent.

18. A process according to any preceding claim, wherein the first phase substantially envelopes the second phase.

19. A process according to any preceding claim, wherein the first flavour is included in the first phase and the second flavour is included in the second phase; or wherein the first flavour and the second flavour are incorporated in the first phase and the second flavour is incorporated in the second phase; or wherein the second flavour is incorporated in the first phase and the first flavour is incorporated in the second phase; or wherein the first and second flavours are incorporated in the first phase and the first and the second flavours are incorporated in the second phase; or wherein the first flavour is incorporated in the first phase and the first and second flavours are incorporated in the second phase; or wherein the second flavour is incorporated in the first phase and the first and second flavours are incorporated in the second phase.

20. A process according to any one of claims 1 to 18, wherein the first and second flavour ingredients are uniformly dispersed within the tablet.

21. A process according to claim 1, wherein the first phase further comprises a binder, which is preferably selected from gelatin, natural gums, cellulose derivatives, avicel microcrystalline cellulose, NF, starch, polyvinylpyrrolidone povidone, sodium alginate, polyethylene glycols, corn syrup, sucrose, lactose, mannitol and dicalcium phosphate dihydrate.

22. A process according to any preceding claim, wherein the second phase includes a diluent, which is preferably selected from lactose, avicel microcrystalline cellulose, NF, starch, dextrose, mannitol and calcium sulfate.

23. A process according to any preceding claim, further comprising a lubricant, which is preferably selected from metallic stearates, stearic acid, hydrogenated vegetable oils, talc, corn starch, polyethylene glycols, sodium benzoate and sodium acetate.

# FIG-1 SUGARLESS CENTERFILLED PRESSED MINTS
## FLAVOR INTENSITY

Legend:
- ●—— CONTROL
- ×—— CENTERFILLED

Y-axis: FLAVOR INTENSITY (0, 10, 20, 30, 40, 50, 60, 70, 80)

X-axis: TIME IN MIN. (0, 5, 10, 15, 20)

EP 0 437 098 A2

FIG-2

FIG-3

FIG-4

FIG-5

FIG-6